(19) Europäisches Patentamt
European Patent Office
Office européen des brevets

(11) **EP 3 594 629 B1**

(12) **EUROPEAN PATENT SPECIFICATION**

(45) Date of publication and mention
of the grant of the patent:
**24.02.2021 Bulletin 2021/08**

(51) Int Cl.:
***G01D 5/20*** *(2006.01)*

(21) Application number: **18182689.2**

(22) Date of filing: **10.07.2018**

(54) **INDUCTIVE SENSOR DEVICE WITH CROSS COUPLED TRACKS**

INDUKTIVE SENSORVORRICHTUNG MIT KREUZGEKOPPELTEN SPUREN

DISPOSITIF DE CAPTEUR INDUCTIF AVEC PISTES À COUPLAGE TRANSVERSAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2020 Bulletin 2020/03**

(73) Proprietor: **Sagentia Limited**
**Harston**
**Cambridgeshire CB22 7GG (GB)**

(72) Inventors:
• **LANGE, Andreas**
**37130 Gleichen-Reinhausen (DE)**

• **JONES, Ross Peter**
**Cambridge CB1 8HQ (GB)**
• **LODGE, Graham Roderick**
**Somersham PE28 3JU (GB)**

(74) Representative: **Rüger Abel Patentanwälte PartGmbB**
**Patentanwälte**
**Webergasse 3**
**73728 Esslingen a. N. (DE)**

(56) References cited:
**EP-A1- 3 299 770        EP-A2- 0 743 508**
**DE-A1-102004 026 311    US-A1- 2016 146 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention refers to an inductive sensor device having a sensor unit with a transmission circuit and a receiving circuit that is moveable along a scale in order to determine the absolute position between the sensor unit and the scale.

Such inductive sensor devices comprise at least one and regularly two or more tracks of scale elements extending along the measuring direction. Each track of scale elements is detected by means of one transmitter and one receiver circuit. Providing two or more tracks can increase the resolution and provide absolute position determination over a longer range.

An inductive sensor device is for example disclosed in DE 100 49 368 A1 or EP 1 014 041 B1. The scale elements of each track are arranged with different scale wavelengths. Accordingly, a Vernier arrangement is obtained. The sine and cosine signals obtained, when the sensor unit moves along the tracks of the scale, provide different signal wavelengths and phases. Combining these signals can be used to extend the measuring range. An alternative possibility would be to use a track having a small scale wavelength and a track with a coarse scale wavelength.

EP 0 743 508 A2 discloses an inductive sensor device having two transmitter coils that transmit a sine signal and cosine signal respectively. These phase shifted signals are coupled by one track of scale elements with a receiver coil to generate a receiver signal containing a sine and cosine portion. The coupling between the sine and cosine signals and the receiver coil is modified with the same flux modulating property.

EP 3 299 770 A1 and DE 10 2004 026 311 A1 also show an inductive sensor device having two transmitter coils coupled with one receiver coil by one track of scale elements.

The inductive sensor device disclosed in US 2016/0146636 A1 has a control unit connected with a transmitter circuit and a receiver circuit.

Even in such known inductive sensor devices with two tracks the range for absolute position determination is still limited. The very small and filigree features in the coil designs, that are necessary for laying out the coils on a printed circuit board, affect the periodicity of the signal. Moreover, certain manufacturing variations or noise in the electronics for processing the signals limit the range of absolute position detection. Manufacturing variations are particularly variations in the alignment of the sensor unit compared to the scale, variations in the thickness of the circuit boards and in the design of the coil or mechanical misalignments of the sensor circuits relative to the scale.

One measure to further increase the absolute detection range would be to add additional tracks. However, this increases the required space, which is usually not available in a measuring device, particularly a hand-held measuring device.

DE 100 49 368 A1 further describes a multi-track Vernier encoder in which the flux modulating loops are connected between tracks, allowing one transmitter coil to be used on one track and receive coils to be used on a different track. This does not extend the range of the sensor, but shall rather avoid direct coupling between the transmit and receive coils.

In order to improve the absolute position detection range of an inductive sensor device DE 100 49 368 A1 proposes to vary the height of scale loops of one track such that the amplitude of the signal provided by the respective assigned receiver circuit changes. The height of the scale loops in one track increases from one end of the track to the other end of the track. Accordingly this additional amplitude information is used to identify periodically repeating sub-ranges in which fine absolute position detection is possible.

Evaluations of this concept have shown that the signals provided by the receive circuits are sensitive, particularly to an offset in a transverse direction between the sensor unit and the scale transverse to the measuring direction. Thus, an extension of the measuring range compared with other two-track sensor devices of about three times is possible, but a further increase of the total measuring range is difficult, because it causes ambiguity.

It is therefore an object of the present invention to provide an inductive sensor device for absolute position detection that provides the possibility to extend the measuring range without the need to add additional tracks. Another object can be to provide an inductive sensor device with low power consumption. Another object can be to provide an inductive sensor device with absolute position detection that has low sensitivity to manufacturing and alignment variations.

This object is solved by means of an inductive sensor device according to claim 1.

The inductive sensor device according to the invention comprises a scale and a sensor unit that is moveable relative to the scale in a measuring direction. The sensor unit comprises a transmitter circuit and a receiver circuit. The transmitter circuit comprises a first transmitter coil and a second transmitter coil.

The scale has a first track with a plurality of first scale elements arranged along a first axis extending in measuring direction. The first scale elements provide a fist flux modulating property for a first magnetic field of the first transmitter coil and a second flux modulating property for a second magnetic field of the second transmitter coil. The first and second flux modulating properties are different from each other. The first and second flux modulating properties each vary with the position with the first scale elements in measuring direction along the first track.

A control unit is provided that is communicatively connected with the transmitter circuit and the receiver circuit.

The control unit is adapted to operate the first transmitter coil and the receiver circuit to create a first receiver signal and to operate the second transmitter coil and the receiver circuit to create a second receiver signal. The operation of the first and second transmitter coil may overlap in time. Preferably, during at least one time period only the first or only the second transmitter coil is operated. This facilitates distinguishing the first and second transmitter signal in the transmitter circuit from each other.

The control unit is further adapted to calculate the position of the sensor unit in measuring direction with regard to the scale depending at least from the first and the second receiver signals.

By using only one track and a respective receiver circuit and two transmitter coils it is possible to provide two measurement channels with only one track of scale elements. This additional measurement channel provides an additional measurement signal with low power consumption of the inductive sensor device. This is particularly useful in handheld sensor devices that are powered by batteries or other energy storing elements with limited capacity.

Particularly the receiver signals may have different spatial phases but may have the same spatial period. Alternatively, the receiver signals may have different spatial periods.

When the first and second receiver signal are combined, a position dependent quantity can be derived.

In one embodiment, the second flux modulating property creates an amplitude modulation of the second receiver signal that depends on the position of the sensor unit in measuring direction.

In one embodiment the first receiver signal has a spatial phase that varies with the position of the sensor unit in measuring direction.

A combination of the first and second receiver signal may lead to a position dependent quantity that can be referred to as "amplitude phase". It is possible to make this amplitude phase robust to a variety of sensor imperfections, particularly mechanical misalignments between the sensor unit and the scale.

In one preferred embodiment the transmitter circuit is adapted to operate first and second transmitter coils independently from each other. It is particularly possible to only operate one of the transmitter coils at least during a specific time duration. It is also possible to avoid operating the transmitter coils concurrently, but to operate the first and second transmitter coil only subsequently.

Preferably the first flux modulating property of the first scale elements is adapted to vary the first receiver signal periodically with a first period during a relative movement between the sensor unit and the scale in measuring direction. The flux modulating property of the first scale elements is adapted to vary the second receiver signal periodically with a second period during a relative movement between the sensor unit and the scale in measuring direction. The first period and the second period are different from each other. This allows to provide a Vernier type measurement with an extended measuring range with only one track of scale elements compared with other inductive sensor devices having only one track of sensor elements.

It is particularly preferred to provide a second track with a plurality of second scale elements arranged along a second axis parallel to the first axis. The second scale elements have a flux modulating property. With such a design at least three receiving signals or even four receiving signals may be created to determine the relative position between the sensor unit and the scale in measuring direction. This allows to remarkably extend the measuring range in measuring direction and concurrently avoid ambiguity and provide high accuracy.

In a design with two tracks of scale elements the control unit is preferably adapted to operate the second transmitter coil and the receiver circuit to create a third receiver signal and/or to operate the first transmitter coil and the receiver circuit to create a fourth receiver signal by modulating respective first or second magnetic field with the second scale elements. The modulation of the third and/or fourth receiver signal varies position dependent in measuring direction different from the first and second receiver signal.

In one preferred embodiment all of the scale elements have four sides and/or corners and might have a rectangular shape. It is also preferred that each of the second scale elements has the same flux modulating property independent from its position in measuring direction along the second track. This provides to create receiver signals by modulating particularly the second magnetic field of the second transmitter coil that provides a good signal to noise ratio and is thus insensitive against noise.

In one preferred embodiment each second scale element has a rectangular shape with the same width in measuring direction and with the same height in a transverse direction that is transverse to the measuring direction. It is also preferred that all of the second scale elements are aligned in measuring direction, such that the position of the second scale elements with regard in transverse direction is identical for all of the second scale elements.

It is also advantageous that the first scale elements are equally spaced in measurement direction to define a first scale wavelength. Alternatively or additionally the second scale elements are equally spaced in measurement direction to define a second scale wavelength. It is preferred that the first scale wavelength is different from the second scale wavelength. In so doing, a Vernier type design of the inductive sense device can be achieved. The first scale wavelength can be used as parameter that defines the first flux modulating property of the first scale elements.

In order to provide the second flux modulating property of the first scale elements it is possible to vary at least one of the width or the height or the transverse position of at least a portion of the first scale elements depending from the position of the respective first scale elements in measuring direction. Thus the geometry and/or transverse position of at least a portion of the first scale elements may vary in the measurement direction. When the geometry and/or transverse position of the first scale elements varies, it is possible to induce currents in each first scale element by operating the first and/or second transmitter coil, wherein these currents have the same phase.

In one preferred embodiment where the geometry and/or transverse position of the first scale elements varies in measuring direction, a finite number of different geometries (or shapes) and/or transverse positions is provided. The finite number of geometries and/or transverse positions is less than the number of first scale elements.

In one specific embodiment of the inductive sensor device each first scale element has an inner portion on one side of the first axis, for example adjacent to the second track, and an opposite outer portion on the respective opposite side of the first axis. The second flux modulating property of at least one of the inner or the outer portions of the first scale elements varies with the position of the first scale element in measuring direction along the first track. For example either the inner or the outer portion may not vary in measuring direction and may have a constant geometry or shape and transverse position for all of the second scale elements. The geometry of the respective other outer or inner portion of each first scale element may vary for example with regard to the height in transverse direction and/or the width in measuring direction.

One embodiment of the inductive sensor device provides first scale elements wherein the flux modulating property of the inner portions varies according to first rule and the flux modulating property of the outer portions of the first scale elements varies according to a second rule. For example each first scale element has with regard to the transverse direction a top and an opposite bottom end. The transverse position of the bottom end may vary according to the second rule depending from the position in measuring direction and the transverse position of the top ends of the first scale elements may vary according to the first rule dependent from the position of the first scale elements in measuring direction.

The variation of the first scale elements with regard to their second flux modulating property may be smooth. The first and second rule may describe sine or cosine curves respectively. Particularly, the first and second rules differ from each other.

To reduce computing burden for the control unit, the provided receiver signals can be evaluated by using a look-up table for determining a derived position quantity value, particularly an amplitude phase value. Predefined threshold values may be used for distinguishing the amplitude phase values contained in the look-up table. The threshold values refer to the provided receiver signals.

In one preferred embodiment the first and/or second scale elements are closed conductor loops. Particularly each conductor loop has two side conductor sections extending mainly in measuring direction and two transverse conductor sections extending mainly in transverse direction. The width dimension of the side conductor sections may be larger than the width dimension of the transverse conductor sections.

In a preferred embodiment by means of flux modulating properties of the first track the following modulation can be obtained:

1. A phase modulation of the first receiver signals that vary sinusoidally or cosinusoidally respectively with a first wavelength;

2. An amplitude modulation of the first receiver signals that vary with position of the sensor unit along the scale;

3. An amplitude modulation of the second receiver signals that vary with position of the sensor unit along the scale.

Preferably, in addition to the first track, a second track with second scale elements is provided and used to create a phase modulation of third receiver signals that vary sinusoidally or cosinusoidally respectively with a second wavelength.

It is further preferred that one property is independent from the position of the sensor unit along the scale, which may be the amplitude of the third receiver signals.

By means of at least one phase modulation, a fine position detection is possible. A combination of both phase modulations can be used to determine a vernier phase that gives absolute position over a certain distance. By further considering at least one of the amplitude modulations and preferably both amplitude modulations, the absolute position range can be extended remarkably. It is additionally possible to use a position independent amplitude of one receiver signal for compensating mechanical tolerances and particularly gap variations.

Preferred embodiments of the present invention are disclosed in the dependent claims, the specification and drawings. In the following preferred embodiments of the invention are explained in more detail referring to the attached drawings. In these drawings:

Figure 1 shows a schematic top view of a measuring instrument having an inductive sensor device according to an embodiment of the present invention,

Figure 2 shows a schematic top view of one embodiment of a scale unit having two scale tracks with first and second scale elements respectively,

Figure 3 is a schematic illustration of an embodiment of a sensor unit containing a transmitter circuit and a receiver circuit,

Figure 4 is a schematic illustration of the embodiment of the sensor unit shown in figure 3 illustrating the inductive couplings of the coils of the inductive sensor device,

Figure 5 shows one embodiment of scale elements that are configured as conductive scale loops,

Figure 6 shows two first receiver signals that are provided by receiver coils of the receiver circuit,

Figure 7 shows two second receiver signals that are provided by receiver coils of the receiver circuit,

Figure 8 shows two third receiver signals that are provided by receiver coils of the receiver circuit,

Figure 9 illustrates schematically the principle of the absolute position determination using an amplitude phase determined from the provided receiver signals from the receiver circuit,

Figure 10 shows an exemplary variation in the relative position and relative orientation of the sensor unit and the scale of an inductive sensor device,

Figure 11 is a schematic illustration of two tracks of scale elements according to an embodiment of the present invention and the assigned transmitter and receiver coils,

Figure 12 shows a portion of the two tracks according to an embodiment shown in figure 11 and a first transmitter coil assigned to the first track,

Figure 13 shows a schematic and exemplary curve that illustrates the current values induced in the first scale elements of first track by operating the first transmitter coil shown in figure 12,

Figure 14 shows a portion of the two tracks of the embodiment shown in figure 11 and second transmitter coil assigned to the second track,

Figure 15 shows a schematic exemplary curve of current values that are induced in the first scale elements of the first track by operating the second transmitter coil shown in figure 14,

Figure 16 is a schematic illustration of an example of a trajectory characterizing an amplitude phase value that varies cyclically,

Figure 17 shows the trajectory of figure 16 and exemplary distinguishable, non-overlapping tolerance regions,

Figure 18 and 19 illustrate further embodiments of the scale tracks with the assigned transmitter and receiver coils respectively,

Figure 20 is a schematic illustration of an example of a trajectory characterizing an amplitude phase value that varies cyclically for the embodiment shown in figure 19,

Figure 21 is an exemplary principal illustration of a lookup table that may be stored and accessed by means of a control unit,

Figure 22 a schematic illustration of another embodiment of scale loops with an increased width dimension of those sections that extend mainly in measuring direction, and

Figure 23 is a simplified schematic illustration of an example of a trajectory according to figure 20 that is created by using different shapes of scale elements.

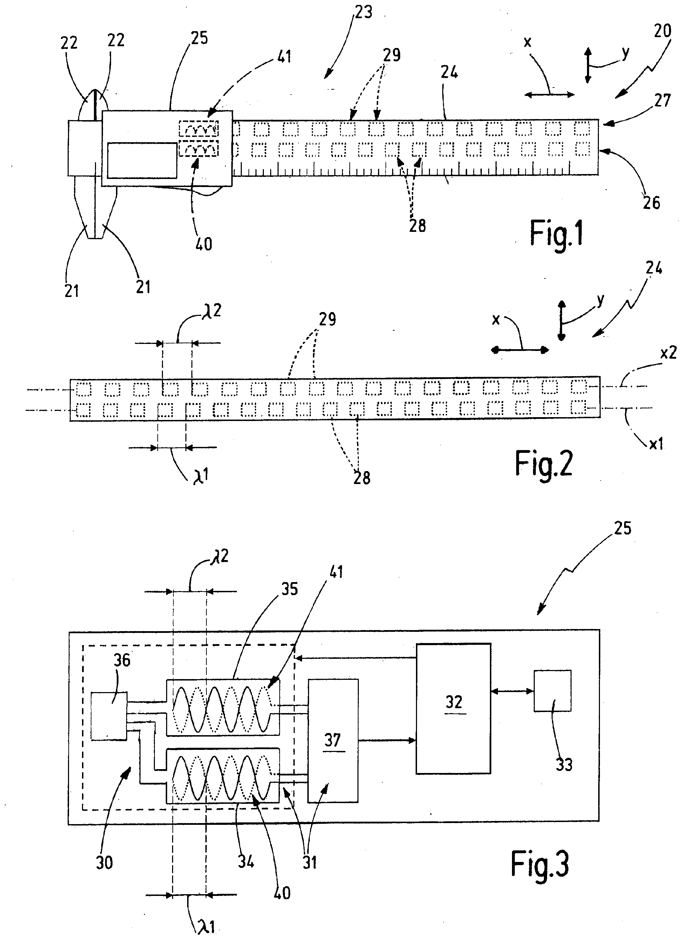

Figure 1 is a schematic illustration of an exemplary measuring instrument 20 in form of a caliper. The caliper is realized as digital caliper for measuring a distance between inside jaws 21 and/or outside the jaws 22 of an object. A distance is measured by means of an inductive sensor device 23. Such a sensor device 23 may also be used for other digital measuring instruments like micrometer gauges, test indicators, touch probes or the like. The inductive sensor device 23 can be used in every measuring instrument with two parts that are moveable relative to each other in a linear and/or circular direction. In the following the invention is explained based on a relative movement between a scale 24 and a sensor unit 25 that may be moveably attached and guided along the scale 24.

The scale 24 contains at least one track of scale elements and the scale 24 of the preferred embodiment contains two tracks and preferably only two tracks of scale elements. According to the described embodiment a first track 26 and a second track 27 are provided. The two tracks 26, 27 extend parallel with each other in a measuring direction x. The first track 26 comprises a plurality of first scale elements 28 arranged along a first axis X1 extending in measuring direction x. The first scale elements 28 are arranged distant from each other in measuring direction x, such that the width of a first scale element 28 in measuring direction x and the gap between two adjacent first scale elements 28 define a first scale wavelength $\lambda 1$, as shown in figure 2. Similarly the second track 27 comprises a plurality of second scale elements 29 arranged along a second axis X2 in measuring direction x. The two axes X1, X2 extend parallel with each other. The width of a second scale element 29 together with the gap between two adjacent second scale elements 29 defines a second scale wavelength $\lambda 2$. The arrangement and characteristics of the scale elements 28, 29 or the two tracks 26, 27 will be described in more detail below.

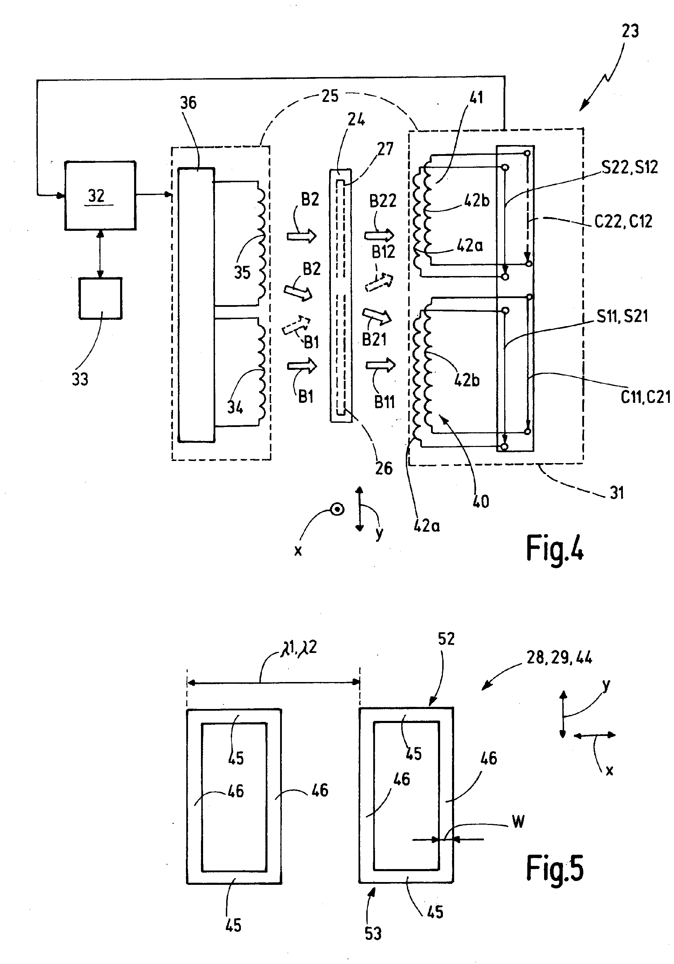

A schematic block diagram of the sensor unit 25 is shown in figures 3 and 4. The sensor unit 25 comprises a transmitter circuit 30 and a receiver circuit 31. The transmitter circuit 30 and the receiver circuit 31 are communicatively connected with control unit 32. The control unit 32 has access to a memory 33. The control unit 32 and the memory 33 can be part of the sensor unit 25.

The transmitter circuit 30 is indirectly inductively coupled with the receiver circuit 31 via the scale elements 28, 39, wherein the scale elements 28 and 29 respectively are adapted to modulate the inductive coupling. Accordingly, receiver signals that are created by means of the receiver circuit 31 are modulated and vary when the sensor unit 25 moves along the scale 24 in measuring direction x. Direct coupling between the transmitter circuit 30 and the receiver circuit 31 is prevented to the most possible extent.

As schematically illustrated in figures 3 and 4, the transmitter circuit 30 comprises a first transmitter coil 34 and a second transmitter coil 35. The first transmitter coil 34 is adapted to create a first magnetic field B1 that inductively couples with the first scale elements 28 of the first track 26. The second transmitter coil 35 is provided to create a second magnetic field B2 that inductively couples with the second scale elements 29 of the second track 27. As explained in more detail below, the first magnetic field B1 also inductively couples with the second scale elements 29 of the second track 27 and/or the second magnetic field B2 also inductively couples with first scale elements 28 of the first track 26. In order to create the magnetic fields B1, B2, the transmitter coils 34, 35 are connected with an AC voltage source 36 that may be controllable by means of the control unit 32. The control unit 32 may, e.g. power on and power off the AC voltage source 36 and may control one or more characteristics of the first magnetic field B1 and/or the second magnetic field B2, e.g. the strength of the respective magnetic field B1, B2.

The receiver circuit 31 contains a first receiver coil arrangement 40 and in the described embodiment also a second receiver coil arrangement 41. The receiver circuit 31 may also contain processing means 37 that are adapted to process currents or voltages induced in the respective receiver coil arrangements 40, 41. Such processing means 37 may be separate from the control unit 32 or can alternatively be part of the control unit 32 and thus the control unit 32 may also be directly connected with the receiver coil arrangements 40, 41.

If only one track and in the present embodiment the first track 26 of scale elements is provided, the second receiver coil arrangement 41 is not present. However, it is preferred to have at least two tracks 26, 27 or - as illustrated - exactly two tracks 26, 27.

The first transmitter coil 34 creates a first magnetic field B1 if it is operated by means of the controllable voltage source 36. Similarly, the second transmitter coil 35 may be operated by means of the controllable voltage source 36 in order to create a second magnetic field B2. The control unit 32 is adapted to create the first magnetic field B1 and the second magnetic field B2 concurrently during at least one time period and/or subsequently during at least one time period. In the preferred embodiment at least during a certain time period only one of the magnetic fields B1 or B2 is created.

The first receiver coil arrangement 40 is adapted to detect modified magnetic fields and at least a first modified magnetic field B11 that is formed by modifying the first magnetic field B1 by at least some of the first scale elements 28, and a second modified magnetic field B21 that is formed by a modification of the second magnetic field B2 by at least some of the first scale elements 28 of the first track 26 (figure 4).

According to the present embodiment, a second track 27 is provided and the receiver circuit 31 comprises the second receiver coil arrangement 41. The second receiver coil arrangement 41 is adapted to detect a third modified magnetic field B22 formed by a modification of the second magnetic field B2 by at least some of the second scale elements 29 of the second track 27. Optionally, it is also possible to detect a forth modified magnetic field B12 by means of the second receiver coil arrangement 41 formed by a modification of the first magnetic field B1 by at least some of the second scale elements 29 of the second track 27 (schematically illustrated in dashed lines in figure 4).

In the preferred embodiment each of the receiver coil arrangements contains two receiver coils 42a, 42b, that are offset relative to each other in the measuring direction x. The offset corresponds particularly to a position phase of 90 degrees. The loops of the receiver coils 42a, 42b are formed by conductors that follow a sinusoidal or cosinusoidal shape. Therefore, according to the present embodiment, one of the receiver coils 42a can be referenced as sinusoidal coil 42a and the other receiver coil 42b can be referenced as cosinusoidal coil 42b.

As will be described later in more detail, the receiver circuit 31 provides at least one first receiver signal S11, C11 and at least one second receiver signal S21, C21. In the present embodiment at least one third receiver signal S22, C22 is provided. Optionally, it is possible to also provide at least one fourth receiver signal S12, C12. These signals are created by detection of the modified magnetic fields, B11, B21 by the first receiving coil arrangement 40 and the modified magnetic fields B22, B12 by the second receiver coil arrangement 41.

The first and second scale elements 28, 29 are passive scale elements that have a defined flux modulating property. As shown in figure 5, each of the scale elements 28, 29 can be realized as closed scale loop 44 made of or comprising conductive material. One embodiment of such a scale loop 44 is shown schematically in figure 5. Each scale loop 44 has two side conductor sections 45 that are arranged distant to each other in the transverse direction y transverse to the measuring direction x and two transverse conductor sections 46 that are arranged distant from each other in measuring direction x. The two transverse conductor sections 46 are connected with each other by means of the side conductor section 45 and vice versa. The side conductor sections 45 extend in the example of figure 5 in measuring direction x and the transverse conductor sections 46 extend in transverse direction y. In this embodiment the widths w of the conductor sections 45, 46 are equal.

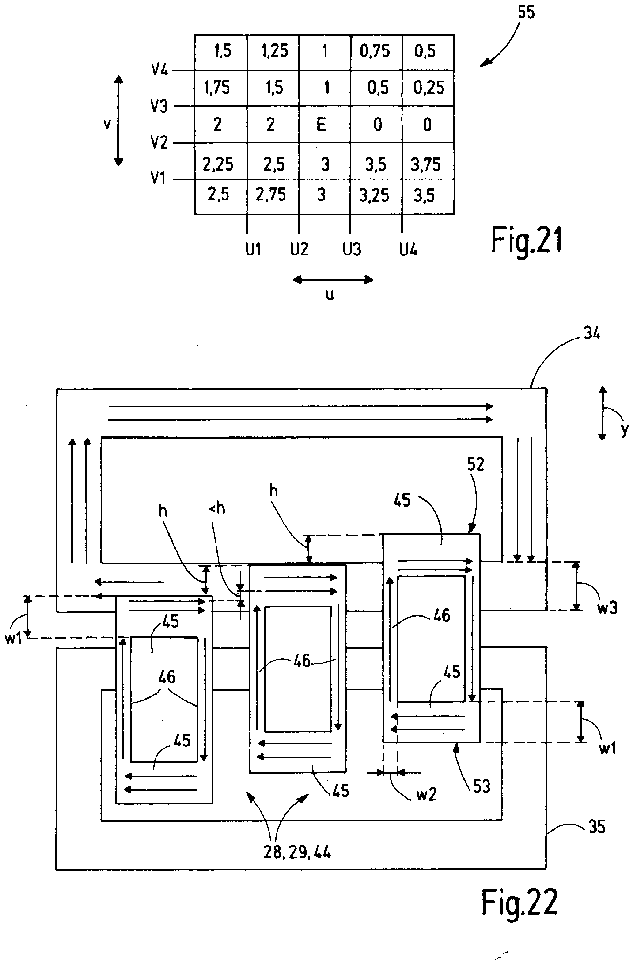

Figure 22 illustrates an alternative embodiment of the scale loops 44. The difference compared to the embodiment of figure 5 is that the side conductor sections 45 have a first width w1 that is larger than a second width w2 of the transverse conductor sections 46. The first width w1 may be approximately equal to a third width w3 of the conductor that forms the loop of the first or second transmitter coil 34, 35.

In figure 22 currents are schematically illustrated that flow in the first transmitter coil 34 and the three exemplarily illustrated scale loops 44. The illustrated scale loops 44 are assumed to be offset in transverse direction y from each other (e.g. due to manufacturing tolerances) to illustrate an unintended misalignment or offset in transverse direction y. Adjacent scale loops 44 are for example displaced by an offset h, as illustrated in figure 22. As can be seen, the eddy currents induced in the scale loops 44 due to the first magnetic field B1 in this exemplary embodiment are less displaced in transverse direction y compared with the offset h between the scale loops 44. The reason is that the eddy currents inside the scale loops 44 try to mirror the currents in the first transmitter coil 34 and thus flow as close as possible to the current in the first transmitter coil 34. The eddy currents of the scale loops 44 are responsible for the modification of the modified magnetic fields B11 or B12. Because the position in transverse direction y of these eddy currents is less displaced than the offset h, such an extension of the width (first width w1) of the axial conductor sections 45 makes the arrangement less sensitive to mis-placements in transverse direction y.

The first scale elements 28 provide a first flux modulating property and additionally a second flux modulating property. Particularly, the first flux modulating property is provided to the first magnetic field B1 of the first transmitter coil 34 to create the modified first magnetic field B11. The second flux modulating property of the first scale elements 28 is particularly adapted to modify the second magnetic field B2 provided by the second transmitter coil 35 in order to create the second modified magnetic field B21.

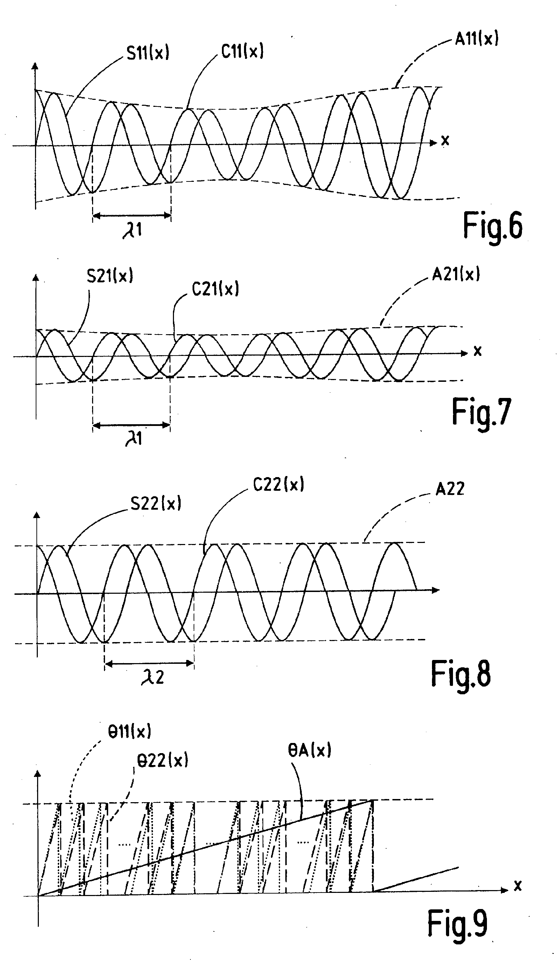

The first flux modulating property is in the present example provided by arranging the first scale elements 28 in measuring direction x along the first axis X1 at equal distances to define the first scale wavelength $\lambda 1$. When the sensor unit 25 moves along the scale 24, the first magnetic field B1 is modified periodically based on the first scale wavelength $\lambda 1$. The respective first modified magnetic field B11 is detected by means of the two receiver coils 42a, 42b of the first receiver coil arrangement 40 such that two first receiver signals S11, C11 depending from the position of the sensor unit 25 in measuring direction x are created in the receiver circuit 31, wherein the sinusoidal receiver coil 42a provides a first sinusoidal signal S11(x) and the cosinusoidal receiver coil 42b provides a first cosinusoidal signal C11(x) as illustrated in figure 6. These two signals S11, C11 have an amplitude A11(x) that also varies with the position of the sensor unit 25 in the measuring direction x. Accordingly, the two first receiver signals S11, C11 can be described by the following equations:

$$S11(x) = A11(x) \cdot \sin\left(\frac{2\pi x}{\lambda 1}\right) \qquad (1)$$

$$C11(x) = A11(x) \cdot cos\left(\frac{2\pi x}{\lambda 1}\right) \qquad (2)$$

A first period of the first receiver signals S11, C11 corresponds to the first scale wavelength $\lambda$1.

The variation of the first amplitude A11 is created, because the first scale elements 28 provide an additional second flux modulating property, that varies with the position of the second scale elements 28 in measuring direction x.

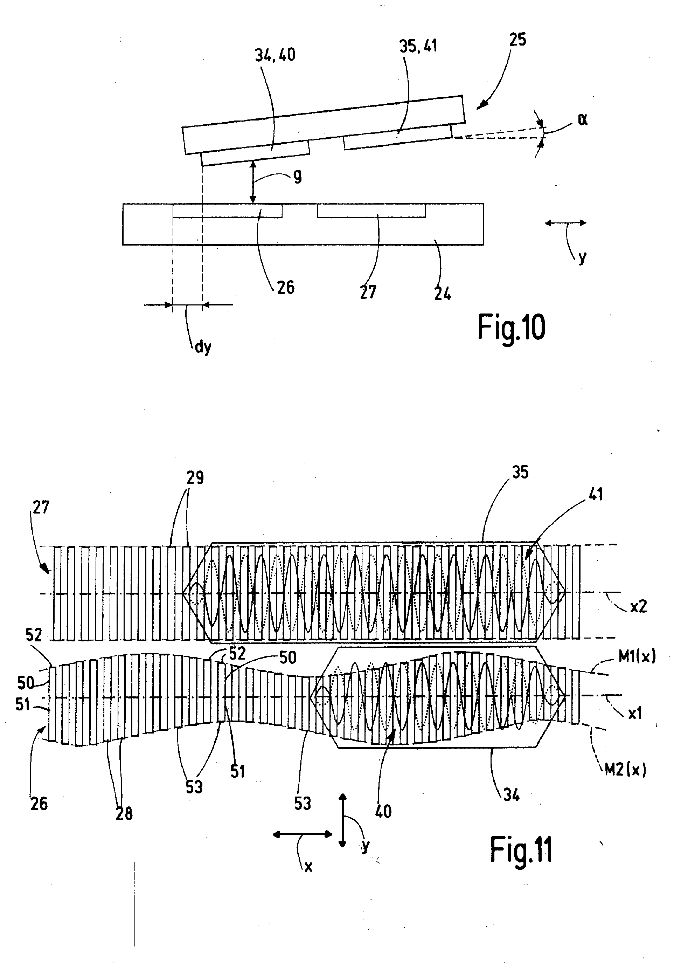

As shown in figure 11, one preferred embodiment of the first track 26 contains first scale elements 28 having an inner portion 50 on one side of the first axis X1 and an adjacent outer portion 51 on the respective opposite side of the first axis X1. The inner portion 50 is arranged adjacent to the second track 26. Each first scale element 28 has with regard to the transverse direction y an upper end 52 and an opposite lower end 53. In this example, the upper end 52 is contained in the inner portion 50 and the lower end 53 is contained in the outer portion 51. The dimension of the first scale element 28 between the upper end 52 and the lower end 53 corresponds to the height of the first scale element 28. As shown in figure 11, the height of the first scale elements 28 is not constant and it varies periodically depending on the position of the first scale element 28 in measuring direction x. In this embodiment, the transverse position of the upper ends 52 follows a first modulating rule M1(x) and the position of the bottom ends 53 follows a second modulating rule M2(x). The first modulating rule M1 and the second modulating rule M2 are in this example defined by curves, particularly sinusoidal or cosinusoidal curves. The first modulating rule M1 and the second modulating rule M2 preferably differ from each other. However, in an alternative embodiment, the first and second modulating rules M1(x), M2(x) could be identical.

Due to the variation in the position of the upper ends 52 and the lower ends 53 of the first scale element 28, the height of the first scale elements 28 is varied depending on the two modulating rules M1(x), M2(x). As a consequence, the flux modulating property of the first scale elements 28 varies along the first axis X1 in measuring direction x. The variation of the height and in this embodiment the modulated transverse position of the upper and lower ends 52, 53 forms a second flux modulating property of the first scale elements 28.

This second flux modulating property of the first scale elements 28 is responsible for the variation of the first amplitude A11 that varies depending on the position of the sensor unit 25 in measuring direction x.

Figure 7 shows the two second receiver signals S21, C21 created due to the modification of the second magnetic field B2, provided by the second transmitter coil 35, by the first scale elements 28. One second receiver signal is detected by the sinusoidal receiver coil 42a and the other second receiver signal is detected by the cosinusoidal receiver coil 42b. As can be seen, the second receiver signals have a period corresponding to the first scale wavelength $\lambda$1 and the second amplitude A21(x) varies according to the second flux modulating property of the first scale elements 28, that is defined by the modulating rule M1(x) and M2(x). The second receiver signals S21(x) and C21(x) can be described by means of the following equations:

$$S21(x) = A21(x) \cdot sin\left(\frac{2\pi x}{\lambda 1}\right) \qquad (3)$$

$$C21(x) = A21(x) \cdot cos\left(\frac{2\pi x}{\lambda 1}\right) \qquad (4)$$

These second receiver signals S21(x), C21(x) are created due to cross-coupling of the second magnetic field B2 to the first track 26. By providing the first and second flux modulating properties in this first track 26, two independent measuring channels can be obtained by only one single track of scale elements, here the first track 26. Thus, it is possible to improve the position measurement with low required space and low electrical energy consumption. This is particularly interesting for inductive sensor devices 23 that are powered by battery or other energy sources having limited capacity.

As also shown in figure 11, the geometry or shape of the second scale elements 29 of the second track 27 is identical and does not vary depending on the position of the second scale element 29 in the measuring direction x. All of the second scale elements 29 provide the same flux modulating effect. The height in transverse direction y and the width in measuring direction x of all of the second scale elements 29 is equal.

Figure 8 shows the second signals S22(x) and C22(x) that are created due to the third modified magnetic field B22 by means of the second scale elements 29 of the second track 27, as received by the sinusoidal receiver coil 42a and the cosinusoidal second receiver coil 42b of the second receiver coil arrangement 41. As the flux modulating property of the second scale elements 29 does not vary along the measuring direction x the amplitude A22 of the second signals S22(x) and C22(x) is constant. The second signals S22(x) and C22(x) can be described by means of the following equations:

$$S22(x) = A22 \cdot \sin\left(\frac{2\pi x}{\lambda 2}\right) \qquad (5)$$

$$C22(x) = A22 \cdot \cos\left(\frac{2\pi x}{\lambda 2}\right) \qquad (6)$$

As also shown in figure 11, each transmitter coil 34, 35 is configured as single loop coil. The first transmitter coil 34 extends over a certain length along the first axis X1 and has a maximum width corresponding to the maximum height of the highest first scale element 28 such that it completely covers the first track 26 in transverse direction y at each position in measuring direction x. The second transmitter coil 35 circumscribes an area that extends over a length along the first axis X1 and has a height in transverse direction y that corresponds approximately to the height of the second scale elements 29. The length of first transmitter coil 34 may be less than the length of the second transmitter coil 35 in measuring direction x. The second transmitter coil 35 circumscribes an area that may overlap with the first track 26.

With view perpendicular to a plane that is spanned by the measuring direction x and the transverse direction y, the first transmitter coil 34 surrounds the first receiver coil arrangement 40 and the second transmitter coil 35 surrounds the second receiver coil arrangement 41. The transmitter coils 34, 35 and the receiver coil arrangements 40, 41 may be arranged on a common circuit board and provided at least partly in common and/or different layers of the circuit board.

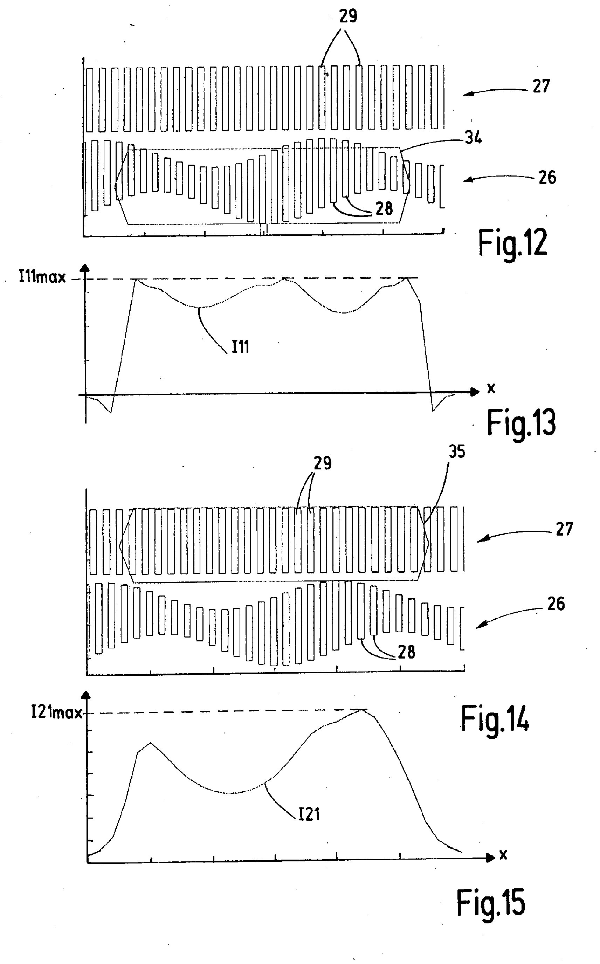

As can be seen in figures 12-15, the currents I11 and 121 induced in the first scale elements 28 of the first track 26 have different patterns depending on whether they are induced due to the first modified magnetic field B11 (figures 12 and 13) or whether they are induced based on the second modified magnetic field B21 (figures 14 and 15). The current curves I11, 121 shown in figures 13 and 15 are only provided for sake of clarity and are formed by straight lines that connect the current amount induced in each of the respective first scale elements 28. The maximum current value $I11_{max}$ induced due to the first magnetic field B1 of the first transmitter coil 34 is larger than the maximum current value $I21_{max}$ induced in the first scale elements 28 due to the second magnetic field B2 provided by the second transmitter coil 35. Also the current distribution along the first scale elements 28 in measuring direction x is different depending on whether the first or second transmitter coil 34, 35 is operated.

Due to using the cross-coupling second receiver signals S21(x), C21(x) are obtained and provide additional information about the position. These second receiver signals S21(x), C21(x) can be obtained or measured at the same time as the third signals S22(x), C22(x). This is because the second magnetic field B2 created by the second transmitter coil 35 is the basis for the second modified magnetic field B21 and the third modified magnetic field B22 that can be concurrently detected by the respective first and second receiver coil arrangements 40, 41. These signals can be at least obtained in quick succession without the need to turn off the second transmitter coil 35.

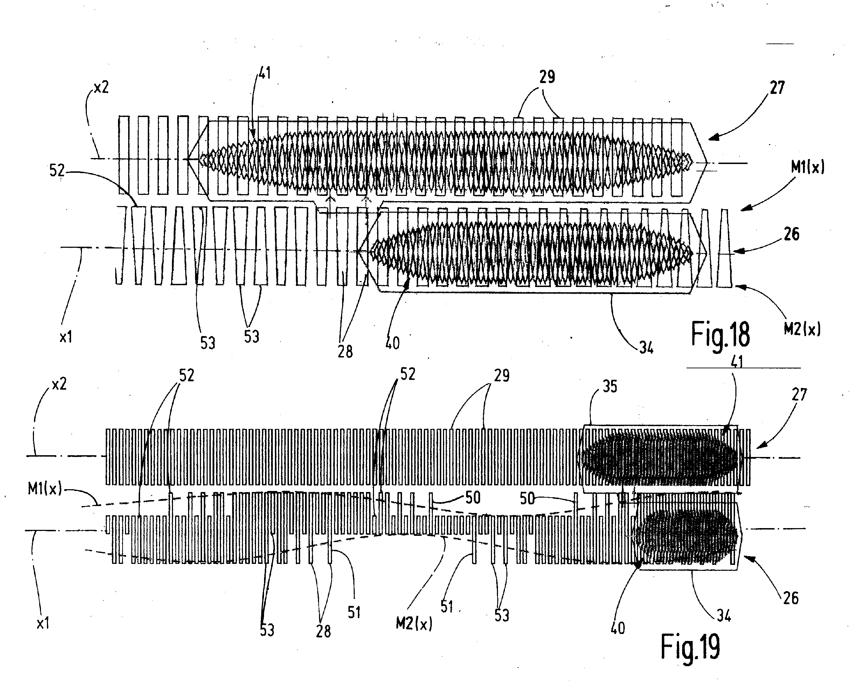

Figures 18 and 19 each show alternative embodiments of creating the second flux modulating property of the first scale elements 28.

In figure 18 the second flux modulating property of the first scale elements 28 is provided by varying the width of the inner portions 50 and outer portions 51 according to the first and second modulating rule M1, M2. In this embodiment the dimension of the upper ends 52 and lower ends 53 that is the respective dimensions of the side conductor sections 45 in measuring direction x is modulated according to the first modulating rule M1(x) for the upper ends 52 and according to the second modulating rule M2(x) for the lower ends 53. In so doing the width of the first scale elements 28 varies in measuring direction x. In this example, the first scale elements 28 are not necessarily rectangular, but have in general four corners and can also have the shape of a trapezoid. This is an additional or alternative possibility to vary the second flux modulating property of the first scale element 28.

In the example shown in figure 11 and described above, the height of the inner and outer portions 50, 51 of the second scale elements 28 was varied smoothly by varying the transverse positions of the respective upper and lower ends 52, 53. This variation can also be coded as shown in figure 19. The total area content of the inner portions 50 of all first scale elements 2is approximated to the curve described by the first modulating rule M1(x). Similarly, the total area content of the outer portions 51 of all first scale elements 28 is approximated to correspond to the second modulation rule M2(x). In this embodiment, the upper ends 52 of the first scale element 28 can be arranged in at least two or preferably in only two definite positions so as to either provide a large inner portion 50 or a short inner portion 50. Similarly, the lower ends 53 can be arranged in at least two or preferably in only two definite positions. They can have one of two possible positions so as to provide a long or short outer portion 51 of the first scale elements 28. Accordingly, in regions where the curve of the first modulating rule M1(x) or the second modulating rule M2(x) is very close to the first axis X1, the upper ends 52 or lower ends 53 respectively are in the inner positions next to the first axis X1. In regions, where the first modulating rule M1(x) has the maximum distance from the first axis X1, the upper ends 52 are in their outer transverse positions from the first axis X1 and in regions where the second modulating rule M2(x) has a large distance from the first axis X1, the lower ends 53 are in their outer transverse positions with regard to the first axis X1. In so doing the modulating rules are coded by digitally changing the transverse positions of the upper end 52 and the lower end 53 so as to approximate the second flux modulating property defined by the modulating rules M1, M2.

According to the invention, three different sets of receiver signals are created: The first receiver signals S11, C11, the second receiver signals S21, C21 and the third receiver signals S22, C22. Based on the first signals a first position phase θ11(x) and a second position phase θ22(x) may be calculated according to the following equations:

$$\theta 11(x) = \arctan 2\big(S11(x), C11(x)\big) \qquad (7)$$

$$\theta 22(x) = \arctan 2\big(S22(x), C22(x)\big) \qquad (8)$$

These two position phases θ11, θ22 may be combined to give an absolute position over a certain range or pitch of the inductive sensor device 23. This can be done with these two position phases θ11 and θ22 unambiguously provided that certain tolerance ranges due to nonlinearity, misalignment, electronic noise and the like are not exceeded. However the unambiguous measurement range in measuring direction x is limited.

According to the present embodiment of the invention, an amplitude phase value θA is additionally provided as position quantity value that is obtained by combining the available receiving signals (compare figure 9). For this embodiment the available receiving signals are the first receiving signals S11(x), C11(x), the second receiving signals S21(x), C21(x) and the third receiving signals S22(x), C22(x). This amplitude phase value θA is determined by means of the first, second and third signals and particularly by using the respective amplitudes:

$$A11(x) = \sqrt{S11^2 + C11^2} \qquad (9)$$

$$A21(x) = \sqrt{S21^2 + C21^2} \qquad (10)$$

$$A22(x) = \sqrt{S22^2 + C22^2} \qquad (11)$$

In the present example the third amplitude A22 does not change with the position in measuring direction x and is constant. The other amplitudes vary, depending from the position as shown in figures 7 and 8. From these amplitudes a first ratio R1 and a second ratio R2 are calculated as follows:

$$R1 = \frac{A22(x)}{A11(x)} \qquad (12)$$

$$R2 = \frac{A21(x)}{A11(x)} \qquad (13)$$

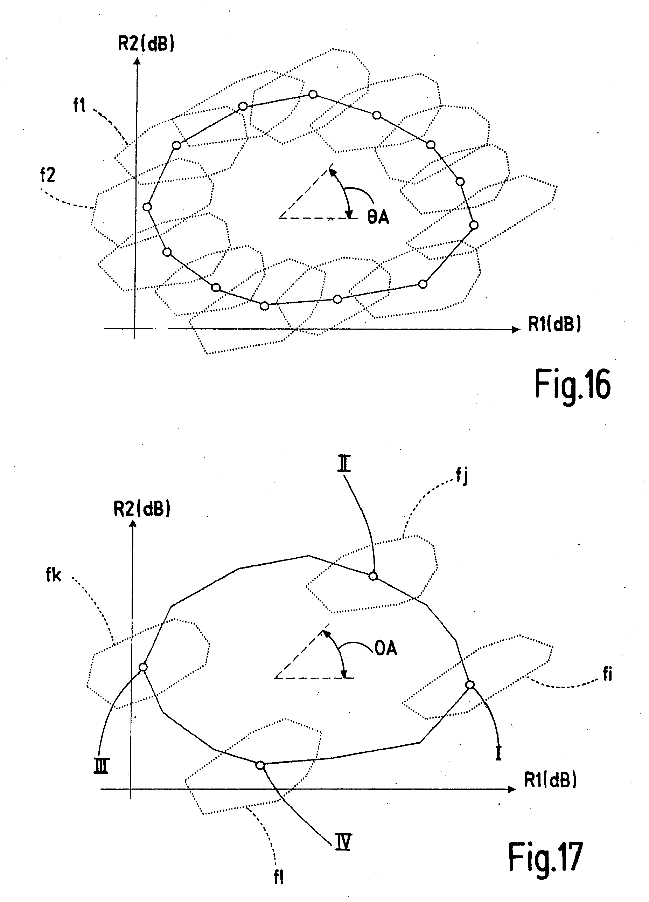

Thus a two-dimensional space - that is spanned by the two ratios R1, R2 - is created as shown in figures 16 and 17. The amplitude ratios R1, R2 create a closed trajectory T when the sensor unit 25 moves along the scale 24. The position along this trajectory T can be described by means of the amplitude phase value θA. Because this amplitude phase value θA varies cyclically, a simple incremental counting can be used to keep track of the absolute position without encountering any ambiguity. It is to be noted that the accurate position within one cycle of the amplitude phase value θA may be determined by using the position phase θ11(x) and/or θ22(x) of the first and second signals S11(x), C11(x), S22(x), C22(x). Particularly by avoiding any variation in the flux modulating property of the second scale elements 29, the second track 27 and the second signals S22(x), C22(x) and/or the respective position phase θ22(x) is suitable for fine position determination.

Each point on the trajectory T shown in figures 16 and 17 may only be determined within a certain accuracy within a respective range of deviation. This is due to misalignments like a tilt angle α of the sensor unit 25 with regard to the scale 24, an offset dy in transverse direction y between the sensor unit 25 and the scale 24 and/or variations of the gap g between the sensor unit 25 and the scale 24, as shown in figure 10. Therefore polygonal tolerance ranges f1, f2,... fi surround the respective points on the trajectory T. However, tolerance ranges f1, f2,... fi that are adjacent or near each other may overlap, as schematically illustrated by way of example in figure 16. This means that the calculation of the first and second ratio R1, R2 may not be used to determine the amplitude phase value θA precisely.

But it has to be noted that for the extension of the measuring range it is sufficient to determine whether a cycle around the trajectory T has been completed, which means that it has to be determined whether the amplitude phase value θA has already changed from 0° to 360°. If this is determined, an increment counter is increased by one. In order to achieve this, tolerance ranges fi, fj, fk, fl are selected that do not overlap. A calculation of the ratios within one of these tolerance ranges is used to conclude that the amplitude phase value θA has a predefined position, e.g. one of the positions I, II, III, IV on the trajectory T as shown in figure 17. Thus advancing of the amplitude phase value θA from position I to position II and so forth along the trajectory T can be determined. If position I is reached again, the cycle along the trajectory T is completed and the increment counter is increased by one. In the exemplary illustration in figure 17, four distinct tolerance ranges and respective positions are used. The number of tolerance ranges and positions on the trajectory T may vary. It is preferable to use at least three non-overlapping tolerance ranges, which corresponds to three distinct positions on the trajectory T.

In a preferred embodiment a change in the amplitude phase value θA is unambiguously detected over the distance that the vernier phase - obtained from θ11, θ22 - repeats. If for example the vernier phase repeats at a specific distance (e.g. about 80mm) a change of the amplitude phase value θA from one tolerance range (e.g. fi) to the next non-overlapping tolerance range (e.g. fj) can be determined before or at least with reaching said specific distance.

Preferably the distance over which the amplitude phase value θA repeats is larger than the distance over which the vernier phase - obtained from θ11, θ22 - repeats.

In a preferable embodiment the power consumption of the sensor can be minimized by reducing the number of calculations. This can be done by using a lookup table 55, as shown in figure 17. First, instead of taking square roots as in the equation (9) to (11), the square amplitudes are used and a first square ratio u and a second square ratio v are calculated as follows:

$$ u = \frac{A11^2(x)}{A22^2(x)} \qquad (14) $$

$$ v = \frac{A21^2(x)}{A22^2(x)} \qquad (15) $$

The lookup table 55 corresponds to a two-dimensional field with an amplitude phase value θA within each of the fields. Adjacent fields are separated in one direction by means of first threshold values U1 to U4 for the first square ratio u and in the other direction of the two-dimensional lookup table 55 the fields are separated by means of second threshold values V1 to V4 for the second square ratio v. Please note that this number of threshold values is only for explaining the principle of this method and in practice the number of threshold values in each direction may be larger, e.g. at least 15 or 20. The threshold values U1 to U4 and V1 to V4 are predefined and do not need to be calculated. It is only necessary to calculate the square amplitudes and to multiply the first square amplitude $A22^2$ with the first square ratio thresholds from U1 to U4 successively and to compare the result with the calculated second square amplitude $A11^2$. The same comparison can be done in the other dimension by multiplying the first square amplitude $A22^2$ with the second root thresholds from V1 to V4 and to compare the result with the calculated third square amplitude $A21^2$. In so doing, a field in the two-dimensional lookup table 55 can be determined that describes a position along the trajectory T as shown in figures 16 or 13. The values 0, 1, 2 and 3 in the lookup table 55 correspond to four distinct positions I, II, III and IV. The values in the other fields in the lookup table 55 correspond to intermediate positions along the trajectory T that may be determined.

Note that the field in the middle of the lookup table 55 is assigned with an error value E, because it is not unambiguously possible to decide to which position along the trajectory T the middle or center inside the trajectory T belongs.

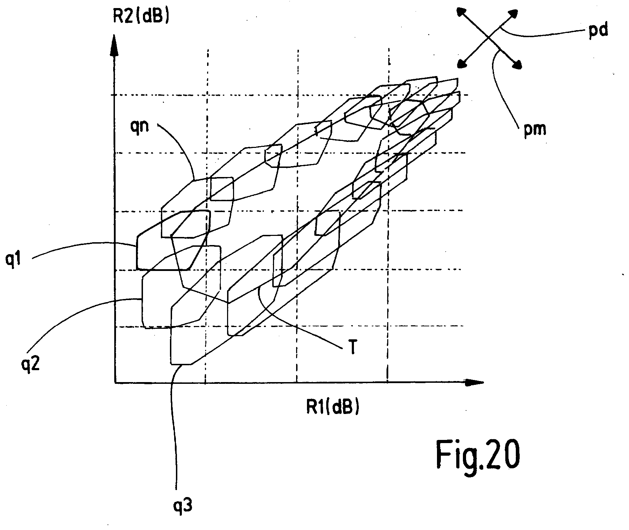

The trajectory T shown in figures 16 and 17 and the respective tolerance ranges f1, f2... fn are obtained from the embodiment shown in figures 11 to 15. Different therefrom, the kind of modulation of the second flux modulating property of first scale elements 28 as illustrated in figure 19 leads to a different form of tolerance ranges q1, q2, ...qn as illustrated in figure 20. The calculation of the first and second ratios R1, R2 corresponds to the equations (12) and (13) given above. It was found through simulation and experiment that such a digital modulation of the second flux modulating property of the first scale elements 28 is even more insensitive to mechanical misalignment (as shown in figure 10 by way of the example) between the sensor unit 25 and the scale 24. As can be seen in figure 20, directly adjacent tolerance ranges q1, q2 to qn may overlap such that a precise determination of a certain position along the trajectory T may not be possible. Comparable with the embodiment described above (with reference to figures 16 and 17), a number of tolerance ranges qi can be selected, that do not overlap and allow determining advancing from one fault tolerance range qi to the next selected tolerance range qj. For example, the tolerance ranges q1 and q3 do not overlap, such that advancing from q1 to q3 can be determined unambiguously.

It was also found that the tolerance ranges q1, q2, ... qn have a preferred extension in a direction at 45 degrees in the logarithmic scale of figure 20. This direction corresponds to a constant ratio of the first square ratio u divided through the second square ratio v (u/v = constant). Taking this preferred extension into considerations, the look-up table 55 of figure 21 may be adapted. Instead of using the first and second square ratios u, v an adapted look-up table 55 for the embodiment of the sensor device 23 shown in figure 19 could use the variables pn=u·v and pd= u/v as inputs instead of u and v. As a consequence, the grid defined by the threshold values is rotated about 45 degrees as illustrated in figure 20 by arrows for the variables pd and pn. This simplifies distinguishing the different tolerance ranges qi from each other for determination of advancing along the trajectory T.

In embodiments where the receipt circuit 31 uses a phase-sensitive detector an unwanted complication for decoding of the signals can be added, because modulating the size of the scale elements 28 not only modulates the inductive coupling to the transmitter coils 34, 35, but also the self-inductance and resistance. The ratio of the self-inductance to the resistance affects the phase of the eddy current distribution in the respective scale element. This is delicate if a phase-sensitive detector is used in the receiver circuit 31. To overcome this drawback the width of a respective transverse conductor section 46 or side conductor section 45 can be adjusted to balance the phase response of the scale elements. Accordingly to keep the phase of the induced eddy currents constant, the width of the transverse conductor sections 46 can be adapted to the total height of the scale element to avoid variation of the phase of the eddy currents.

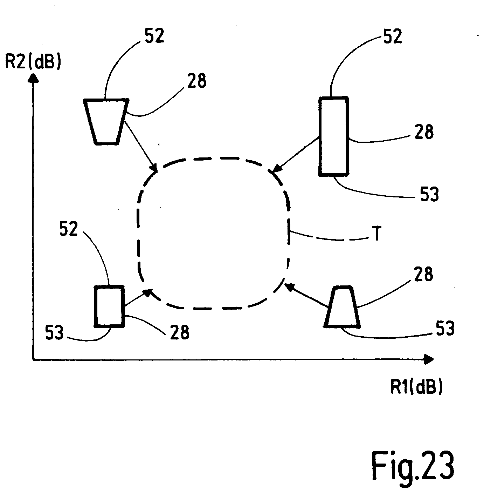

Figure 23 shows another possible embodiment that allows an improved determination of advancing along the trajectory T. Along adjacent sections of the first track 26 different metric shapes of first scale elements 28 can be provided. The rectangular shape of the first scale element 28 produces a large first amplitude A11 and a large second amplitude A21. Another rectangular form of the first scale element 28 having a smaller height in transverse direction produces a small first amplitude A11 and a small second amplitude A21. The trapezoidal shapes of the first scale elements 28 produce either a larger first amplitude A11 compared to the second amplitude A21 or else vice versa, depending on whether the larger width of the scale element 28 is adjacent to the second track 27 or opposite the second track 27. Combining at least some of these shapes for the first scale elements 28 in the first track 26 allows enlarging the trajectory T shown in figure 20 for the embodiment of figure 19 to reshape the trajectory T from a quite narrow shape in one direction (narrow elliptical shape) to a larger extension in this direction (more circular shape) where the differences in the dimensions in orthogonal directions is reduced.

Another alternative embodiment can be obtained if not only the first scale elements 28 provide an additional second flux modulating property, but also the second scale elements 29 of the second track 27 provide two distinct flux modulating properties. In so doing, additional position information can be exploited.

The present invention refers to an inductive sensor device 23 having a scale 24 with at least first track 26 having first scale elements 28 arranged along a first axis X1 in a measuring direction x. A sensor unit 25 is moveable relative to the scale 24 in the measuring direction x. The sensor unit 25 comprises a transmitter circuit 30 and a receiver circuit 31. The transmitter circuit 30 comprises a first transmitter coil 34 and a second transmitter coil 35. The transmitter coils 34, 35 are preferably arranged side by side in the transverse direction y transverse to the measuring direction x. The areas of the first and second transmitter coils 34, 35 do not overlap preferably.

A control unit 32 is provided and communicatively coupled with the transmitter circuit 30 and the receiver circuit 31. The first scale elements 28 have a first flux modulating property and a second flux modulating property, that are different to each other, wherein each flux modulating property is adapted to modulate a magnetic field created by the first or second transmitter coil 34, 35 dependent from the position of a movement of the sensor unit 25 in measuring direction x. In so doing independent position information can be created by only one track 26 of scale elements 28 by modulating the first magnetic field B1 from the first transmitter coil 34 and the second magnetic field B2 from the second transmitter coil 35.

Reference signs:

| | |
|---|---|
| 20 | measuring instrument |
| 21 | inside jaw |
| 22 | outside jaw |
| 23 | inductive sensor device |
| 24 | scale |

| 25 | sensor unit |
|---|---|
| 26 | first track |
| 27 | second track |
| 28 | first scale element |
| 29 | second scale element |
| 30 | transmitter circuit |
| 31 | receiver circuit |
| 32 | control unit |
| 33 | memory |
| 34 | first transmitter coil |
| 35 | second transmitter coil |
| 36 | AC voltage source |
| 37 | processing means |

| 40 | first receiver coil arrangement |
|---|---|
| 41 | second receiver coil arrangement |
| 42a | sinusoidal second receiver coil |
| 42b | cosinusoidal second receiver coil |

| 44 | scale loop |
|---|---|
| 45 | axial conductor section |
| 46 | transverse conductor section |

| 50 | inner portion of the first scale element |
|---|---|
| 51 | outer portion of the first scale element |
| 52 | upper end |
| 53 | lower end |

| 55 | lookup table |
|---|---|

| I | first position on trajectory |
|---|---|
| II | second position on trajectory |
| II | third position on trajectory |
| IV | fourth position on trajectory |

| $\alpha$ | tilt angle |
|---|---|
| $\lambda 1$ | first scale wavelength |
| $\lambda 2$ | second scale wavelength |
| $\theta 11$ | first position phase |
| $\theta 22$ | second position phase |
| $\theta A$ | amplitude phase value |

| B1 | first magnetic field |
|---|---|
| B11 | first modified magnetic field |
| B2 | second magnetic field |
| B21 | second modified magnetic field |
| B22 | third modified magnetic field |
| B12 | forth modified magnetic field |
| dy | displacement |
| f1-fn | tolerance ranges |
| g | gap |
| h | offset |
| M1(x) | first modulating rule |
| M2(x) | second modulating rule |
| pd | variable |
| pm | variable |
| q1-qn | tolerance ranges |
| R1 | first ratio |

| R2 | second ratio |
|---|---|
| T | trajectory |
| u | first square ratio |
| U1-U4 | first threshold values |
| v | second square ratio |
| V1-V4 | second threshold values |
| w | width |
| w1 | first width |
| w2 | second width |
| w3 | third width |
| x | measuring direction |
| X1 | first axis |
| X2 | second axis |
| y | transverse direction |

**Claims**

1. Inductive sensor device (23) comprising:

   a scale (24) comprising at least a first track (26) with a plurality of first scale elements (28) arranged along a first axis (X1) extending in a measuring direction (x),
   a sensor unit (25) moveable relative to the scale (24) in the measuring direction (x) and comprising a transmitter circuit (30) and a receiver circuit (31),
   wherein the transmitter circuit (30) comprises a first transmitter coil (34) and a second transmitter coil (35),
   wherein the first scale elements (28) provide a first flux modulating property for a first magnetic field (B1) of the first transmitter coil (34) and a second flux modulating property for a second magnetic field (B2) of the second transmitter coil (35), wherein the first and second flux modulating properties vary position dependent in the measuring direction (x) different from each other,
   a control unit (32) is provided that is communicatively connected with the transmitter circuit (30) and the receiver circuit (31),
   wherein the control unit (32) is adapted to:

   operate the first transmitter coil (34) and the receiver circuit (31) to create a first receiver signal (S11(x), C11(x)),
   operate the second transmitter coil (35) and the receiver circuit (31) to create a second receiver signal (S21(x), C21(x)),
   calculate the position of the sensor unit (25) in measuring direction (x) depending at least from the first and the second receiver signals (S11(x), C11(x), S21(x), C21(x)).

2. Inductive sensor device according to claim 1, wherein the receiver circuit (31) comprises at least one receiver coil arrangement (40, 41) having two receiver coils (42a, 42b) that are offset from each other ir the measuring direction (x).

3. Inductive sensor device according to claim 1 or 2, wherein the transmitter circuit (30) is adapted to operate the first and second transmitter coils (34, 35) independently from each other.

4. Inductive sensor device according to any of the preceding claims wherein the first flux modulating property of the first scale elements (28) is adapted to vary the first receiver signal (S11(x), C11(x)) with a first period during a relative movement between the sensor unit (25) and the scale (24) in the measuring direction (x) and wherein the second flux modulating property of the first scale elements (28) is adapted to vary the second receiver signal (S21(x), C21(x)) with a second period during a relative movement between the sensor unit (25) and the scale (24) in the measuring direction (x), wherein the second period is different from the first period.

5. Inductive sensor device according to any of the preceding claims, wherein the scale (24) further comprises a second track (27) with a plurality of second scale elements (29) arranged along a second axis (X2) parallel to the first axis (X1) and having a flux modulating property.

6. Inductive sensor device according to claim 5, wherein the control unit (32) is adapted to:

operate the second transmitter coil (35) and the receiver circuit (31) to create a third receiver signal ((S22(x), C22(x))) and/or operate the first transmitter coil (34) and the receiver circuit (31) to create a forth receiver signal ((S12(x), C12(x))),

calculate the position of the sensor unit (25) ir the measuring direction (x) additionally depending from the third and/or the forth receiver signal (S22(x), C22(x), S12(x), C12(x)).

7. Inductive sensor device according to claim 5 or 6, wherein each second scale element (29) has the same flux modulating property independent from its position in the measuring direction (x) along the second track (27).

8. Inductive sensor device according to claim 7, wherein all of the second scale elements (29) have the same width parallel to the first axis (X1) and the same height in a transverse direction (y) transverse to first axis (X1).

9. Inductive sensor device according to any of the claims 5 to 8, wherein the first scale elements (28) are equally spaced in the measurement direction (x) to define a first scale wavelength ($\lambda$1) and the second scale elements (29) are equally spaced in measurement direction (x) to define a second scale wavelength ($\lambda$2) that differs from the first scale wavelength ($\lambda$1).

10. Inductive sensor device according to claim 9, wherein the first scale wavelength ($\lambda$1) defines the first flux modulating property of the first scale elements (28).

11. Inductive sensor device according to any of the preceding claims, wherein each first scale element (28) has a width in the measuring direction (x) and a height in a transverse direction (y) transverse to the first axis (X1), and wherein the second flux modulating property of the first scale elements (28) is defined be at least one of:

- the width of at least a portion of the first scale elements (28) that varies with the position in measuring direction (x),
- the height of at least a portion of the first scale elements (28) that varies with the position in measuring direction (x),
- the transverse position in the transverse direction (y) of the first scale elements (28) that varies with the position in measuring direction (x).

12. Inductive sensor device according to any of the preceding claims, wherein each first scale element (28) has an inner portion (50) on one side of the first axis (X1) and an outer portion (51) on the opposite side of the first axis (X1), wherein the flux modulating property of at least the inner portions (50) or the outer portions (51) of the first scale elements (28) vary dependent from the position in the measuring direction (x) along the first track (26) in order to define the second flux modulating property of the first scale elements (28).

13. Inductive sensor device according to claim 12, wherein the inner portions (51) of the first scale elements (28) have flux modulating properties varying according to a first rule (M1) dependent from the position ir the measuring direction (x) and the outer portions (51) of the second scale elements (29) have flux modulating properties varying according to a second rule (M2) dependent from the position in the measuring direction (x).

14. Inductive sensor device according to claim 13, wherein the first rule (M1) and the second rule (M2) differ from each other.

15. Inductive sensor device according to any of the preceding claims, wherein the control unit (32) communicatively connected with a memory (33) in which a lookup table (55) is stored that contains amplitude phase values ($\theta$A) distinguishable by means of predefined threshold values (U1-U4, V1-V4) depending at least from the first and second receiver signals (S11(x), C11(x), S21(x), C21(x)).

16. Inductive sensor device according to any of the preceding claims, wherein the first scale elements (28) and/or the second scale elements (29) are closed conductor loops (44).

17. Inductive sensor device according to claim 16, wherein each conductor loop (44) has two side conductor sections (45) extending mainly in the measuring direction (x) and two transverse conductor sections (46) extending mainly in transverse direction (y), wherein the width (w1) of the side conductor sections (45) is larger than the width (w2) of the transverse conductor sections (46).

**Patentansprüche**

1. Induktive Sensoreinrichtung (23) aufweisend:

   eine Skala (24) aufweisend eine erste Spur (26) mit einer Mehrzahl von ersten Skalenelementen (28), die entlang einer sich in eine Messrichtung (x) erstreckenden ersten Achse (X1) angeordnet sind,
   eine Sensoreinheit (25), die in der Messrichtung (x) relativ zu der Skaleneinheit (24) bewegbar ist und einen Senderschaltkreis (30) und einen Empfängerschaltkreis (31) aufweist, wobei der Senderschaltkreis (30) eine erste Senderspule (34) und eine zweite Senderspule (35) aufweist,
   wobei die ersten Skalenelemente (28) eine erste flussmodulierende Eigenschaft für ein erstes magnetisches Feld (B1) der ersten Senderspule (34) und eine zweite flussmodulierende Eigenschaft für ein zweites magnetisches Feld (B2) der zweiten Senderspule (35) bereitstellen, wobei die erste und die zweite flussmodulierende Eigenschaft in unterschiedlicher Weise positionsabhängig in der Messrichtung (x) variieren,
   eine Steuereinheit (32), die mit dem Senderschaltkreis (30) und dem Empfängerschaltkreis (31) kommunikationsverbunden ist, wobei die Steuereinheit (32) eingerichtet ist zum:

   Betreiben der ersten Senderspule (34) und des Empfängerschaltkreises (31), um ein erstes Empfängersignal (S11(x), C11(x)) zu erzeugen,
   Betreiben der zweiten Senderspule (35) und des Empfängerschaltkreises (31), um ein zweites Empfängersignal (S21(x), C21(x)) zu erzeugen,
   Berechnen der Position der Sensoreinheit (25) in Messrichtung (x) abhängig von zumindest dem ersten und dem zweiten Empfängersignal (S11(x), C11(x), S21(x), C21(x)).

2. Induktive Sensoreinrichtung nach Anspruch 1, wobei der Empfängerschaltkreis (31) wenigstens eine Empfängerspulenanordnung (40, 41) aufweist, die zwei Empfängerspulen (42a, 42b) hat, die in der Messrichtung (x) zueinander versetzt sind.

3. Induktive Sensoreinrichtung nach Anspruch 1 oder 2, wobei der Senderschaltkreis (30) dazu eingerichtet ist, die erste und die zweite Senderspule (34, 35) unabhängig voneinander zu betreiben.

4. Induktive Sensoreinrichtung nach irgendeinem der vorhergehenden Ansprüche, wobei die erste flussmodulierende Eigenschaft der ersten Skalenelemente (28) dazu eingerichtet ist, das erste Empfängersignal (S11(x), C11(x)) mit einer ersten Periodendauer zu variieren während einer Relativbewegung zwischen der Sensoreinheit (25) und der Skala (24) in der Messrichtung (x) und wobei die zweite flussmodulierende Eigenschaft der ersten Skalenelemente (28) dazu eingerichtet ist, das zweite Empfängersignal (S21(x), C21(x)) mit einer zweiten Periodendauer zu variieren während einer Relativbewegung zwischen der Sensoreinheit (25) und der Skala (24) in der Messrichtung (x), wobei die zweite Periodendauer verschieden ist von der ersten Periodendauer.

5. Induktive Sensoreinrichtung nach irgendeinem der vorhergehenden Ansprüche, wobei die Skala (24) außerdem eine zweite Spur (27) mit einer Mehrzahl von zweiten Skalenelementen (29) aufweist, die entlang einer zur ersten Achse (X1) parallelen zweiten Achse (X2) angeordnet sind und eine flussmodulierende Eigenschaft aufweisen.

6. Induktive Sensoreinrichtung nach Anspruch 5, wobei die Steuereinheit (32) eingerichtet ist zum:

   Betreiben der zweiten Senderspule (35) und des Empfängerschaltkreises (31), um ein drittes Empfängersignal (S22(x), C22(x)) zu erzeugen und/oder Betreiben der ersten Senderspule (34) und des Empfängerschaltkreises (31), um ein viertes Empfängersignal (S12(x), C12(x)),
   Berechnen der Position der Sensoreinheit (25) in der Messrichtung (x) zusätzlich abhängig von dem dritten und/oder vierten Empfängersignal (S22(x), C22(x), S12(x), C12(x)).

7. Induktive Sensoreinrichtung nach Anspruch 5 oder 6, wobei jedes zweite Skalenelement (29) dieselbe flussmodulierende Eigenschaft aufweist unabhängig von seiner Position in der Messrichtung (x) entlang der zweiten Spur (27).

8. Induktive Sensoreinrichtung nach Anspruch 7, wobei all der zweiten Skalenelemente (29) dieselbe Breite parallel zu der ersten Achse (X1) aufweisen und dieselbe Höhe in einer Querrichtung (y) quer zur ersten Achse (X1).

9. Induktive Sensoreinrichtung nach irgendeinem der Ansprüche 5-8, wobei die ersten Skalenelemente (28) in der Messrichtung (x) mit gleichmäßigem Abstand angeordnet sind, um eine erste Skalenwellenlänge ($\lambda$1) zu definieren

und die zweiten Skalenelemente (29) mit gleichmäßigem Abstand in Messrichtung (x) angeordnet sind, um eine zweite Skalenwellenlänge ($\lambda 2$) zu definieren, die sich von der ersten Skalenwellenlänge ($\lambda 1$) unterscheidet.

10. Induktive Sensoreinrichtung nach Anspruch 9, wobei die erste Skalenwellenlänge ($\lambda 1$) eine erste flussmodulierende Eigenschaft der ersten Skalenelemente (28) bildet.

11. Induktive Sensoreinrichtung nach irgendeinem der vorhergehenden Ansprüche, wobei jedes erstes Skalenelement (28) in der Messrichtung (x) eine Breite hat und in einer Querrichtung (y) quer zu der ersten Achse (X1) eine Höhe hat und wobei die zweite flussmodulierende Eigenschaft der ersten Skalenelemente (28) durch wenigstens eine der Nachfolgenden definiert ist:

   - die Breite von wenigstens einem Abschnitt des ersten Skalenelements (28), die mit der Position in der Messrichtung (x) variiert,
   - die Höhe von wenigstens einem Abschnitt des ersten Skalenelements (28), die mit der Position in der Messrichtung (x) variiert,
   - die Querposition in der Querrichtung (y) der ersten Skalenelemente (28), die mit der Position in Messrichtung (x) variiert.

12. Induktive Sensoreinrichtung nach irgendeinem der vorhergehenden Ansprüche, wobei jedes erstes Skalenelement (28) einen inneren Abschnitt (50) auf einer Seite der ersten Achse (X1) und einen äußeren Abschnitt (51) auf der entgegengesetzten Seite der ersten Achse (X1) aufweist, wobei die flussmodulierende Eigenschaft von zumindest den inneren Abschnitten (50) oder den äußeren Abschnitten (51) der ersten Skalenelemente (28) abhängig von der Position in der Messrichtung (x) entlang der ersten Spur (26) variiert, um die zweite flussmodulierende Eigenschaft der ersten Skalenelemente (28) zu bilden.

13. Induktive Sensoreinrichtung nach Anspruch 12, wobei die inneren Abschnitte (50) der ersten Skalenelemente (28) eine flussmodulierende Eigenschaft aufweisen, die entsprechend einer ersten Regel (M1) abhängig von der Position in der Messrichtung (x) variiert und die äußeren Abschnitte (51) der zweiten Skalenelemente (29) eine flussmodulierende Eigenschaft aufweisen, die entsprechend einer zweiten Regel (M2) abhängig von der Position in der Messrichtung (x) variiert.

14. Induktive Sensoreinrichtung nach Anspruch 13, wobei die erste Regel (M1) und die zweite Regel (M2) voneinander verschieden sind.

15. Induktive Sensoreinrichtung nach irgendeinem der vorhergehenden Ansprüche, wobei die Steuereinheit (32) mit einem Speicher (33) kommunikationsverbunden ist, in dem eine Nachschlagetabelle (55) abgespeichert ist, die Amplituden-Phasenwerte ($\theta A$) enthält, die durch vorher definierte Schwellenwerte (U1-U4, V1-V4), abhängig von wenigstens dem ersten und dem zweiten Empfängersignal (S11(x), C11(x), S21(x), C21(x)) unterscheidbar sind.

16. Induktive Sensoreinrichtung nach irgendeinem der vorhergehenden Ansprüche, wobei die ersten Skalenelemente (28) und/oder die zweiten Skalenelemente (29) geschlossene Leiterschleifen (44) sind.

17. Induktive Sensoreinrichtung nach Anspruch 16, wobei jede Leiterschleife (44) zwei Seitenleiterabschnitte (45) aufweist, die sich im Wesentlichen in der Messrichtung (x) erstrecken und zwei Querleiterabschnitte (46) aufweist, die sich im Wesentlichen in Querrichtung (y) erstrecken, wobei die Breite (w1) der Seitenleiterabschnitte (45) größer ist als die Breite (w2) der Querleiterabschnitte (46).

## Revendications

1. Dispositif de capteur inductif (23) comprenant :

   une graduation (24) comportant au moins une première piste (26) avec une pluralité de premiers éléments de graduation (28) disposés le long d'un premier axe (X1) s'étendant dans une direction de mesure (x),
   une unité de capteur (25) déplaçable par rapport à la graduation (24), dans la direction de mesure (x), et comportant un circuit d'émission (30) et un circuit de réception (31), le circuit d'émission (30) présentant une première bobine d'émission (34) et une deuxième bobine d'émission (35),
   dans lequel les premiers éléments de graduation (28) présentent une première propriété de modulation de flux pour un premier champ magnétique (B1) de la première bobine d'émission (34), et une deuxième propriété de modulation de flux pour un deuxième champ magnétique (B2) de la deuxième bobine d'émission (35), les première et deuxième propriétés de modulation de flux variant en fonction de la position dans la direction de mesure (x), de manière différente l'une par rapport à l'autre,
une unité de commande (32) est prévue qui est reliée du point de vue de la communication au circuit d'émission (30) et au circuit de réception (31),
dans lequel l'unité de commande (32) est adaptée pour :

activer la première bobine d'émission (34) et le circuit de réception (31) aux fins de générer un premier signal de récepteur (S11 (x), C11 (x)),
activer la deuxième bobine d'émission (35) et le circuit de réception (31) aux fins de générer un deuxième signal de récepteur (S21 (x), C21 (x)),
calculer la position de l'unité de capteur (25) dans la direction de mesure (x), en fonction au moins des premier et deuxième signaux de récepteur (S11 (x), C11 (x), S21 (x), C21 (x)).

2. Dispositif de capteur inductif selon la revendication 1, dans lequel le circuit de réception (31) comprend au moins un montage de bobines de réception (40, 41) comportant deux bobines de réception (42a, 42b) qui sont décalées l'une par rapport à l'autre dans la direction de mesure (x).

3. Dispositif de capteur inductif selon la revendication 1 ou 2, dans lequel le circuit d'émission (30) est adapté pour activer les première et deuxième bobines d'émission (34, 35), indépendamment l'une de l'autre.

4. Dispositif de capteur inductif selon l'une quelconque des revendications précédentes, dans lequel la première propriété de modulation de flux des premiers éléments de graduation (28) est adaptée pour faire varier le premier signal de récepteur (S11 (x), C11 (x)) avec une première période au cours d'un mouvement relatif entre l'unité de capteur (25) et la graduation (24), dans la direction de mesure (x), et dans lequel la deuxième propriété de modulation de flux des premiers éléments de graduation (28) est adaptée pour faire varier le deuxième signal de récepteur (S21 (x), C21 (x)) avec une deuxième période au cours d'un mouvement relatif entre l'unité de capteur (25) et la graduation (24), dans la direction de mesure (x), la deuxième période étant différente de la première période.

5. Dispositif de capteur inductif selon l'une quelconque des revendications précédentes, dans lequel la graduation (24) comprend en outre une deuxième piste (27) avec une pluralité de deuxièmes éléments de graduation (29) disposés le long d'un deuxième axe (X2), parallèle au premier axe (X1), et ayant une propriété de modulation de flux.

6. Dispositif de capteur inductif selon la revendication 5, dans lequel l'unité de commande (32) est adaptée pour :

activer la deuxième bobine d'émission (35) et le circuit de réception (31) aux fins de générer un troisième signal de récepteur ((S22 (x), C22 (x)) et/ou activer la première bobine d'émission (34) et le circuit de réception (31) aux fins de générer un quatrième signal de récepteur ((S12 (x), C12 (x)),
calculer la position de l'unité de capteur (25) dans la direction de mesure (x), en fonction, en plus, du troisième et/ou du quatrième signal de réception ((S22 (x), C22 (x), S12 (x), C12 (x)).

7. Dispositif de capteur inductif selon la revendication 5 ou 6, dans lequel chaque deuxième élément de graduation (29) présente la même propriété de modulation de flux, indépendamment de sa position dans la direction de mesure (x) le long de la deuxième piste (27).

8. Dispositif de capteur inductif selon la revendication 7, dans lequel tous les deuxièmes éléments de graduation (29) présentent la même largeur, parallèlement au premier axe (X1), et la même hauteur dans une direction transversale (y), transversale au premier axe (X1).

9. Dispositif de capteur inductif selon l'une quelconque des revendications 5 à 8, dans lequel les premiers éléments de graduation (28) sont espacés à distances égales dans la direction de mesure (x) pour définir une première longueur d'onde de graduation ($\lambda 1$), et les deuxièmes éléments de graduation (29) sont espacés à distances égales dans la direction de mesure (x) pour définir une deuxième longueur d'onde de graduation ($\lambda 2$) qui est différente de la première longueur d'onde de graduation ($\lambda 1$).

10. Dispositif de capteur inductif selon la revendication 9, dans lequel la première longueur d'onde de graduation ($\lambda 1$) définit la première propriété de modulation de flux des premiers éléments de graduation (28).

**11.** Dispositif de capteur inductif selon l'une quelconque des revendications précédentes, dans lequel chaque premier élément de graduation (28) présente une largeur dans la direction de mesure (x) et une hauteur dans une direction transversale (y), transversale au premier axe (X1), et dans lequel la deuxième propriété de modulation de flux des premiers éléments de graduation (28) est définie pour être au moins une des propriétés suivantes :

- la largeur d'au moins une partie des premiers éléments de graduation (28), qui varie avec la position dans la direction de mesure (x),
- la hauteur d'au moins une partie des premiers éléments de graduation (28), qui varie avec la positon dans la direction de mesure (x),
- la position transversale dans la direction transversale (y) des premiers éléments de graduation (28), qui varie avec la position dans la direction de mesure (x).

**12.** Dispositif de capteur inductif selon l'une quelconque des revendications précédentes, dans lequel chaque premier élément de graduation (28) présente une partie intérieure (50) sur un côté du premier axe (X1) et une partie extérieure (51) sur le côté opposé du premier axe (X1), la propriété de modulation de flux au moins des parties intérieures (50) ou des parties extérieures (51) des premiers éléments de graduation (28) variant en fonction de la position dans la direction de mesure (x), le long de la première piste (26), pour définir la deuxième propriété de modulation de flux des premiers éléments de graduation (28).

**13.** Dispositif de capteur inductif selon la revendication 12, dans lequel les parties intérieures (51) des premiers éléments de graduation (28) présentent des propriétés de modulation de flux qui varient conformément à une première règle (M1), en fonction de la position dans la direction de mesure (x), et les parties extérieures (51) des deuxièmes éléments de graduation (29) présentent des propriétés de modulation de flux qui varient conformément à une deuxième règle (M2), en fonction de la position dans la direction de mesure (x).

**14.** Dispositif de capteur inductif selon la revendication 13, dans lequel la première règle (M1) et la deuxième règle (M2) sont différentes l'une de l'autre.

**15.** Dispositif de capteur inductif selon l'une quelconque des revendications précédentes, dans lequel l'unité de commande (32) est reliée sur le plan de la communication à une mémoire (33) dans laquelle est stockée une table de consultation (55) qui contient des valeurs de phase d'amplitude ($\theta$A) pouvant être distinguées à l'aide de valeurs seuils (U1-U4, V1-V4) prédéfinies, dépendant au moins des premier et deuxième signaux de récepteur (S11(x), C11(x), S21(x), C21(x)).

**16.** Dispositif de capteur inductif selon l'une quelconque des revendications précédentes, dans lequel les premiers éléments de graduation (28) et/ou les deuxièmes éléments de graduation (29) sont des boucles conductrices (44) fermées.

**17.** Dispositif de capteur inductif selon la revendication 16, dans lequel chaque boucle conductrice (44) présente deux segments conducteurs latéraux (45), s'étendant principalement dans la direction de mesure (x), et deux segments conducteurs transversaux (46) s'étendant principalement dans la direction transversale (y), la largeur (w1) des segments conducteurs latéraux (45) étant supérieure à la largeur (w2) des segments conducteurs transversaux (46).

Fig.1

Fig.2

Fig.3

**Fig.4**

**Fig.5**

S11(x)　　C11(x)　　　　　　　A11(x)

**Fig.6**

S21(x)　　　　　　　　　　A21(x)

C21(x)

**Fig.7**

C22(x)

S22(x)　　　　　　　　A22

**Fig.8**

θ11(x)

θ22(x)　　　θA(x)

**Fig.9**

Fig.10

Fig.11

Fig.12

Fig.13

Fig.14

Fig.15

Fig.16

Fig.17

Fig.18

Fig.19

Fig.20

55

| 1,5 | 1,25 | 1 | 0,75 | 0,5 |
|-----|------|---|------|-----|
| 1,75 | 1,5 | 1 | 0,5 | 0,25 |
| 2 | 2 | E | 0 | 0 |
| 2,25 | 2,5 | 3 | 3,5 | 3,75 |
| 2,5 | 2,75 | 3 | 3,25 | 3,5 |

V4
V3
v
V2
V1

U1  U2  U3  U4

u

## Fig.21

## Fig.22

Fig.23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10049368 A1
- EP 1014041 B1
- EP 0743508 A2
- EP 3299770 A1
- DE 102004026311 A1
- US 20160146636 A1